# EUROPEAN PATENT APPLICATION

(11) **EP 4 083 095 A1**
(43) Date of publication of application: **02.11.2022**
(21) Application number: 20907773.4
(22) Date of filing: 18.12.2020
(51) Int. Cl.: C08F 290/06, G02C 7/10, C08F 220/10, G02B 5/23

(54) **POLYMERIZABLE COMPOSITION FOR OPTICAL ARTICLE AND OPTICAL ARTICLE**

(30) Priority: 27.12.2019 JP 2019239790
(71) Applicant: Hoya Lens Thailand Ltd., Pathumthani 12130 (TH)
(72) Inventor: SHIMADA Takuya, Tokyo 160-8347 (JP); KOBAYASHI Kei, Tokyo 160-8347 (JP); YAMASHITA Teruo, Tokyo 160-8347 (JP); WATANABE Tsuyoshi, Tokyo 160-8347 (JP)
(74) Representative: Hoffmann Eitle
(86) International application number: PCT/JP2020/047318
(87) International publication number: WO 2021/132047

(57) **Abstract**

There is provided a polymerizable composition for an optical article including a photochromic compound, a component A: an acyclic methacrylate having a molecular weight of 500 or more, and a component B: a (meth)acrylate having a molecular weight of 400 or less and represented by Formula 1. In Formula 1, R¹ and R² each independently represent a hydrogen atom or a methyl group, m represents an integer of 1 or more.

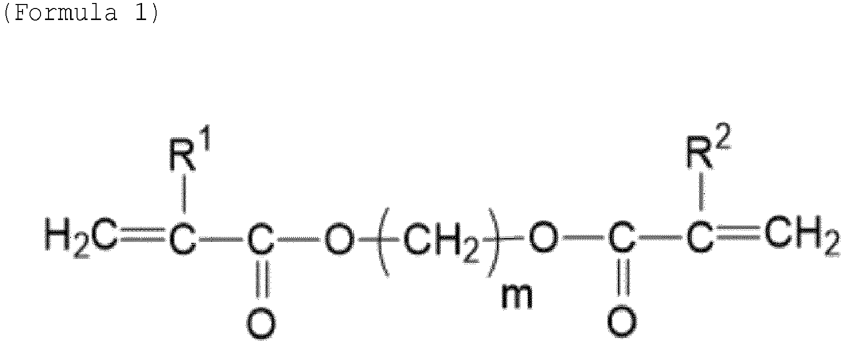

## Description

### [Technical Field]

The present invention relates to a polymerizable composition for an optical article and an optical article.

### [Background Art]

A photochromic compound is a compound having a property of developing a color under emission of light in a wavelength range having photoresponsivity and fading without light emission (photochromic properties). As a method of imparting photochromic properties to an optical article such as a spectacle lens, a method in which a coating containing a photochromic compound and a polymerizable compound is provided on a substrate, and the coating is cured to form a cured layer having photochromic properties (photochromic layer) may be exemplified (for example, refer to PTL 1).

### [Citation List]

### [Patent Literature]

[PTL 1] WO 2003/011967

### [Summary of Invention]

### [Technical Problem]

Examples of properties desired for an optical article having the photochromic property described above include a high coloring density when a color is developed by receiving light outdoors and the like, and excellent visible light transmission when there is no light emission indoors and the like.

One aspect of the present invention provides a polymerizable composition for an optical article which allows a photochromic layer having a high coloring density when a color is developed by receiving light and excellent visible light transmission without light emission to be formed.

### [Solution to Problem]

One aspect of the present invention relates to a polymerizable composition for an optical article (hereinafter simply referred to as a "composition") including
a photochromic compound,
a component A: an acyclic methacrylate having a molecular weight of 500 or more, and
a component B: a (meth)acrylate having a molecular weight of 400 or less and represented by the following Formula 1: 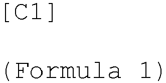 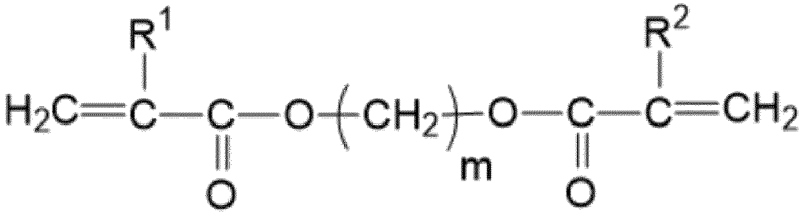 [in Formula 1, R¹ and R² each independently represent a hydrogen atom or a methyl group, and m represents an integer of 1 or more].

The composition contains the component A and the component B. Thereby, in the photochromic layer formed by curing the composition, the photochromic compound that has received light can develop a color at a high density. In addition, such a photochromic layer can exhibit excellent visible light transmission without light emission.

### [Advantageous Effects of Invention]

According to one aspect of the present invention, it is possible to provide a composition for an optical article which allows a photochromic layer having a high coloring density when a color is developed by receiving light and excellent visible light transmission without light emission to be formed. In addition, according to one aspect of the present invention, it is possible to provide an optical article including a photochromic layer having a high coloring density when a color is developed by receiving light and excellent visible light transmission without light emission.

### [Brief Description of Drawings]

[Fig. 1]

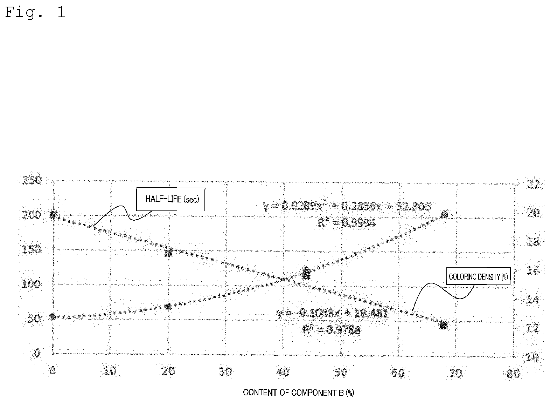

Fig. 1 is a graph in which a coloring density and a half-life are plotted with respect to the content of a component B.

### [Description of Embodiments]

### [Polymerizable composition for optical article]

Hereinafter, a polymerizable composition for an optical article according to one aspect of the present invention will be described in more detail.

In the present invention and this specification, the polymerizable composition is a composition containing a polymerizable compound. The polymerizable compound is a compound having a polymerizable group. The polymerizable composition for an optical article according to one aspect of the present invention is a polymerizable composition used for producing an optical article, and can be a coating composition for an optical article, and more specifically, a coating composition for forming a photochromic layer of an optical article. The coating composition for an optical article is a composition applied to a substrate or the like for producing an optical article. Examples of optical articles include various lenses such as a spectacle lens and a goggles lens, a visor (cap) of a sun visor, and a shield member of a helmet. For example, a spectacle lens produced by applying the composition to a lens substrate becomes a spectacle lens having a photochromic layer and can exhibit photochromic properties.

In the present invention and this specification, "(meth)acrylate" refers to both an acrylate and a methacrylate. An "acrylate" is a compound having one or more acryloyl groups in one molecule. A "methacrylate" is a compound having one or more methacryloyl groups in one molecule. The number of functional groups of the (meth)acrylate is the number of groups selected from the group consisting of acryloyl groups and methacryloyl groups contained in one molecule. In the present invention and this specification, a "methacrylate" containes only a methacryloyl group as a (meth)acryloyl group, and something that containes an acryloyl group and a methacryloyl group as (meth)acryloyl groups is an acrylate. The acryloyl group may be contained in the form of an acryloyloxy group, and the methacryloyl group may be contained in the form of a methacryloyloxy group. The "(meth)acryloyl group" described below refers to both an acryloyl group and a methacryloyl group, and "(meth)acryloyloxy group" refers to both an acryloyloxy group and a methacryloyloxy group. In addition, unless otherwise specified, the groups described may have substituents or may be unsubstituted. If a group has a substituent, examples of substituents include an alkyl group (for example, an alkyl group having 1 to 6 carbon atoms), a hydroxy group, an alkoxy group (for example, an alkoxy group having 1 to 6 carbon atoms), a halogen atom (for example, a fluorine atom, a chlorine atom, and a bromine atom), a cyano group, an amino group, a nitro group, an acyl group, and a carboxyl group. In addition, for a group having a substituent, the "number of carbon atoms" is the number of carbon atoms of a part containing no substituents.

### <Polymerizable compound>

The composition contains at least a component A and a component B as polymerizable compounds. Hereinafter, the component A and the component B will be described.

### (Component A)

The component A is an acyclic methacrylate having a molecular weight of 500 or more. In the present invention and this specification, "acyclic" means that a compound does not include a cyclic structure. On the other hand, "cyclic" means that a compound includes a cyclic structure. The acyclic methacrylate is a mono- or higher-functional methacrylate that does not include a cyclic structure.

The component A can be a monofunctional or bi- or higher-functional methacrylate, and is preferably a bifunctional or trifunctional methacrylate, and more preferably a bifunctional methacrylate. Examples of components A include polyalkylene glycol dimethacrylate. The polyalkylene glycol dimethacrylate can be represented by the following Formula 2: 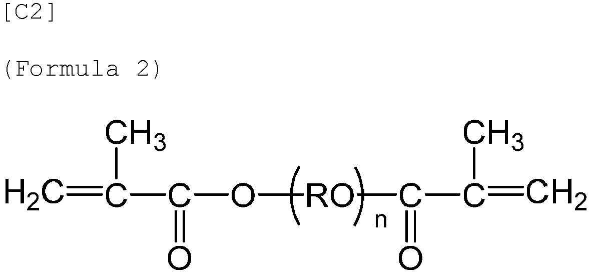 , R represents an alkylene group, and n represents the number of repetitions of alkoxy groups represented by RO, and is 2 or more. Examples of alkylene groups represented by R include an ethylene group, a propylene group, and a tetramethylene group. n is 2 or more, and may be, for example, 30 or less, 25 or less or 20 or less. Specific examples of polyalkylene glycol dimethacrylate include polyethylene glycol dimethacrylate, polypropylene glycol dimethacrylate, and polytetramethylene glycol dimethacrylate.

The molecular weight of the component A is 500 or more. It is inferred that the inclusion of an acyclic bifunctional methacrylate (a component A) having a molecular weight of 500 or more together with a component B, which will be described below in detail, is the reason why a photochromic compound that has received light can develop a color at a high density and a photochromic layer can exhibit excellent visible light transmission without light emission in the photochromic layer formed from the composition. Here, in the present invention and this specification, for the molecular weight of the polymer, a theoretical molecular weight calculated from the structural formula determined by structural analysis of the compound or the raw material preparation ratio during production is used. The molecular weight of the component A is 500 or more, preferably 510 or more, more preferably 520 or more, still more preferably 550 or more, still more preferably 570 or more, still more preferably 600 or more, still more preferably 630 or more, and yet more preferably 650 or more. The molecular weight of the component A is preferably, for example, 2000 or less, 1500 or less, 1200 or less, 1000 or less, or 800 or less, in order to increase the hardness of the photochromic layer.

### (Component B)

The component B is a (meth)acrylate having a molecular weight of 400 or less, and represented by the following Formula 1:

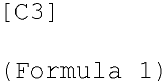

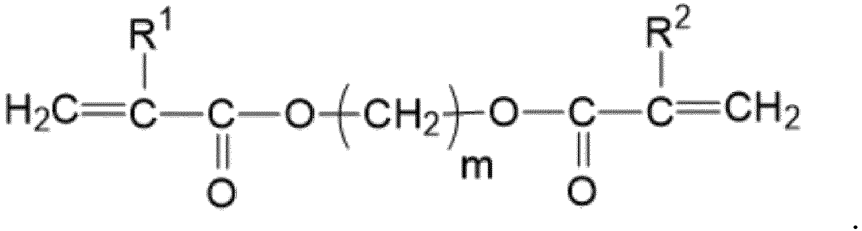

In Formula 1, R¹ and R² each independently represent a hydrogen atom or a methyl group, and m represents an integer of 1 or more. m is 1 or more, and may be, for example, 10 or less, 9 or less, 8 or less, 7 or less or 6 or less.

The molecular weight of the component B is 400 or less, and in order to further increase the coloring density of the photochromic layer, the molecular weight is preferably 350 or less, more preferably 300 or less, and still more preferably 250 or less. In addition, the molecular weight of the component B may be, for example, 100 or more, 150 or more or 200 or more.

The component B may contain, as a (meth)acryloyl group, only an acryloyl group, only a methacryloyl group, or an acryloyl group and a methacryloyl group. In one aspect, the component B preferably contains only an acryloyl group as a (meth)acryloyl group. Specific examples of components B include 1,9-nonane diol diacrylate, 1,6-hexanediol diacrylate, and 1,10-decanediol diacrylate.

The composition may contain, as a polymerizable compound, only the component A and the component B in one aspect, or may contain one or more types of other polymerizable compounds in addition to the component A and the component B in another aspect. Hereinafter, other polymerizable compounds that may be incorporated into the composition will be exemplified.

### (Other polymerizable compound)

A component C and a component D exemplified below are preferable components because they can contribute to improving the performance such as coating suitability of the composition, and adhesion with respect to an adjacent layer without significantly influencing color development under light emission and visible light transmission without light emission of the photochromic layer formed from the composition.

### Component C

In one aspect, the composition may contain an acyclic tri- or higher-functional (meth)acrylate (component C). The component C is preferably tri- to pentafunctional (meth)acrylate, more preferably a trifunctional or tetrafunctional (meth)acrylate, and still more preferably a trifunctional (meth)acrylate. Specific examples of components C include pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, ditrimethylolpropane tetra(meth)acrylate, tetramethylolmethane tetra(meth)acrylate, and tetramethylolmethane tri(meth)acrylate. The molecular weight of the component C may be, for example, in a range of 200 to 400, but is not limited to this range. The component C may contain, as a (meth)acryloyl group, only an acryloyl group, only a methacryloyl group, or an acryloyl group and a methacryloyl group. In one aspect, the acyclic tri- or higher-functional (meth)acrylate preferably contains, as a (meth)acryloyl group, only a methacryloyl group, that is, a methacrylate.

### Component D

In one aspect, the composition may contain a polymerizable compound (component D) having a viscosity of 100 cP (centipores) or less and selected from the group consisting of (meth)acrylates and vinyl ether. In the present invention and this specification, the "viscosity" is a value measured by a vibration type viscometer in the atmosphere at a temperature of 25°C. The viscosity of the component D is 100 cP or less, preferably 70 cP or less, and more preferably 50 cP or less. In addition, the viscosity of the component D may be, for example, 5 cP or more or 10 cP or more. The (meth)acrylate which is one aspect of the component D may be monofunctional to trifunctional, and preferably monofunctional to bifunctional. In addition, the (meth)acrylate which is one aspect of the component D may contain an aryl group (for example, a phenyl group), an amide group and the like. In the present invention and this specification, the "vinyl ether" is a compound having one or more vinyl groups and one or more ether bonds in one molecule, and preferably has two or more vinyl groups in one molecule and more preferably 2 to 4 vinyl groups. In addition, the number of ether bonds contained in the vinyl ether in one molecule is preferably 2 to 4. The molecular weight of the component D may be, for example, in a range of 150 to 250, but is not limited to this range. Specific examples of components D include 2-phenoxyethyl(meth)acrylate, acrylamide, methoxypolyethylene glycol(meth)acrylate, phenoxy polyethylene glycol(meth)acrylate, stearyl (meth)acrylate, 1,10-decanediol di(meth)acrylate, 1,6-hexanediol di(meth)acrylate, 1,9-nonane diol di(meth)acrylate, dipropylene glycol di(meth)acrylate, tripropylene glycol di(meth)acrylate, propylene glycol di(meth)acrylate, ethylene glycol di(meth)acrylate, diethylene glycol di(meth)acrylate, triethylene glycol di(meth)acrylate, tricyclodecanedimethanol di(meth)acrylate, ethoxylated propylene glycol di(meth)acrylate, trimethylolpropane tri(meth)acrylate, ethyl (meth)acrylate, butyl (meth)acrylate, isobutyl (meth)acrylate, tert-butyl (meth)acrylate, 2-ethylhexyl (meth)acrylate, isodecyl (meth)acrylate, dodecyl (meth)acrylate, tridecyl (meth)acrylate, diethylene glycol butyl ether(meth)acrylate, cyclohexyl (meth) acrylate, tetrahydrofurfuryl (meth)acrylate, benzyl (meth)acrylate, isobornyl (meth)acrylate, 2-(dimethylamino)ethyl (meth)acrylate, 2-(diethylamino)ethyl (meth)acrylate, glycidyl (meth)acrylate, polyethylene glycol di(meth)acrylate, tetramethylene glycol di(meth)acrylate, neopentyl glycol di(meth)acrylate, nonamethylene glycol di(meth)acrylate, isoamyl (meth)acrylate, ethylene glycol mono vinyl ether, tetramethylene glycol mono vinyl ether, diethylene glycol mono vinyl ether, 2-ethylhexyl vinyl ether, 2-propenoic acid, 2-[2-(ethenyloxy)ethoxy]ethyl ester, and 2-(2-ethenoxyethoxy)ethyl 2-methylprop-2-enoate.

In one aspect, the composition may contain, as a polymerizable compound, one or more types of other polymerizable compounds in addition to the above components. In the composition, the content of the component A is preferably 50.0 mass% or more, more preferably 55.0 mass% or more, and still more preferably 60.0 mass% or more based on a total amount of 100 mass% of the polymerizable compounds contained in the composition. In one aspect, the component A may be a component whose proportion is the largest among the plurality of polymerizable compounds contained in the composition. In addition, the content of the component A may be 90.0 mass% or less, 85.0 mass% or less, 80.0 mass% or less or 75.0 mass% or less based on a total amount of 100 mass% of the polymerizable compounds contained in the composition. The composition may contain only one type of component A in one aspect, and may contain two or more types thereof in another aspect. When the composition contains two or more types of components A, the content of the component A is a total content of two or more types thereof. This similarly applies to the contents of other components.

Regarding the component B, in a study by the inventors, they observed that the coloring density when a color is developed under light emission tends to be higher as the content of the component B is larger. On the other hand, in a study by the inventors, they observed that the fade rate, which is one index indicating photoresponsivity, is slower as the content of the component B is larger. In consideration of the coloring density, the content of the component B is preferably 5.0 mass% or more, more preferably 10.0 mass% or more, and still more preferably 15.0 mass% or more based on a total amount of 100 mass% of the polymerizable compounds contained in the composition. In addition, in consideration of the photoresponsivity, the content of the component B is preferably 30.0 mass% or less and more preferably 25.0 mass% or less based on a total amount of 100 mass% of the polymerizable compounds contained in the composition.

Regarding the component C, the content of the component C may be 0 mass%, and may be 0 mass% or more, more than 0 mass%, 1.0 mass% or more, 3.0 mass% or more, 5 mass% or more or 7 mass% or more based on a total amount of the polymerizable compounds contained in the composition. The content of the component C may be, for example, 20.0 mass% or less or 15.0 mass% or less based on a total amount of the polymerizable compounds contained in the composition.

Regarding the component D, the content of the component D may be 0 mass%, and may be 0 mass% or more, more than 0 mass%, 1.0 mass% or more, 3.0 mass% or more, 5.0 mass% or more or 7.0 mass% or more based on a total amount of the polymerizable compounds contained in the composition. The content of the component D may be, for example, 20.0 mass% or less or 15.0 mass% or less based on a total amount of the polymerizable compounds contained in the composition.

The content of the polymerizable compound in the composition may be, for example, 80.0 mass% or more, 85.0 mass% or more or 90.0 mass% or more based on a total amount of 100 mass% of the composition. In addition, the content of the polymerizable compound in the composition may be, for example, 99.0 mass% or less, 95.0 mass% or less, 90.0 mass% or less or 85.0 mass% or less based on a total amount of 100 mass% of the composition. In the present invention and this specification, regarding the content, the "total amount of the composition" is a total amount of all components excluding a solvent in the composition containing the solvent. The composition may or may not contain a solvent. When the composition contains a solvent, any solvent in an arbitrary amount can be used as a usable solvent as long as it does not inhibit progress of the polymerization reaction of the polymerizable composition.

### <Photochromic compound>

The composition contains a photochromic compound together with the polymerizable compound. Regarding the photochromic compound contained in the composition, known compounds exhibiting photochromic properties can be used. The photochromic compound can exhibit photochromic properties with respect to, for example, ultraviolet rays. Examples of photochromic compounds include compounds having a known framework exhibiting photochromic properties such as fulgimide compounds, spirooxazine compounds, chromene compounds, and indeno-fused naphthopyran compounds. The photochromic compounds may be used alone or two or more thereof may be used in combination. The content of the photochromic compound of the composition may be, for example, about 0.1 to 15.0 mass% based on a total amount of 100 mass% of the composition, but is not limited to this range.

### <Other components>

The composition may contain one or more types of various additives that can be generally added to the polymerizable composition in an arbitrary content in addition to the polymerizable compound and the photochromic compound. Examples of additives that can be added to the composition may include a polymerization initiator that allows a polymerization reaction to proceed.

For example, regarding the polymerization initiator, a known polymerization initiator can be used, and a radical polymerization initiator is preferable, and it is more preferable that only a radical polymerization initiator be contained as a polymerization initiator. In addition, regarding the polymerization initiator, a photopolymerization initiator or a thermal polymerization initiator can be used, and in order for a polymerization reaction to proceed in a short time, a photopolymerization initiator is preferable. Examples of photoradical polymerization initiators include benzoin acetals such as 2,2-dimethoxy-1,2-diphenylethane-1-one; α-hydroxyketones such as 1-hydroxycyclohexylphenyl ketone, 2-hydroxy-2-methyl-1-phenylpropan-1-one, and 1-[4-(2-hydroxyethoxy)phenyl]-2-hydroxy-2-methyl-1-propane-1-one; α-aminoketones such as 2-benzyl-2-dimethylamino-1-(4-morpholinophenyl)-butane-1-one, and 1,2-methyl-1-[4-(methylthio)phenyl]-2-morpholinopropan-1-one; oxime esters such as 1-[(4-phenylthio)phenyl]-1,2-octadione-2-(benzoyl)oxime; phosphine oxides such as bis(2,4,6-trimethylbenzoyl)phenylphosphine oxide, bis(2,6-dimethoxybenzoyl)-2,4,4-trimethylpentyl phosphine oxide, and 2,4,6-trimethylbenzoyldiphenylphosphine oxide; 2,4,5-triarylimidazole dimers such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, 2-(o-methoxyphenyl)-4,5-diphenylimidazole dimer, and 2-(p-methoxyphenyl)-4,5-diphenylimidazole dimer; benzophenone compounds such as benzophenone, N,N'-tetramethyl-4,4'-diaminobenzophenone, N,N'-tetraethyl-4,4'-diaminobenzophenone, and 4-methoxy-4'-dimethylaminobenzophenone; quinone compounds such as 2-ethylanthraquinone, phenanthrenequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthraquinone, 2-methyl-1,4-naphthoquinone, and 2,3-dimethylanthraquinone; benzoin ethers such as benzoin methyl ether, benzoin ethyl ether, and benzoin phenyl ether; benzoin compounds such as benzoin, methyl benzoin, and ethyl benzoin; benzyl compounds such as benzyl dimethyl ketal; acridine compounds such as 9-phenylacridine, 1,7-bis(9,9'-acridinyl heptane); and N-phenylglycine, and coumarin. In addition, in the 2,4,5-triarylimidazole dimer, substituents on the aryl groups of two triarylimidazole moieties may provide the same symmetric compound, or may provide different asymmetric compounds. In addition, a thioxanthone compound and a tertiary amine may be combined such as a combination of diethylthioxanthone and didimethylaminobenzoic acid. Among these, in consideration of curability, transparency and heat resistance, α-hydroxyketone and phosphine oxide are preferable. The content of the polymerization initiator may be, for example, in a range of 0.1 to 5.0 mass% based on a total amount of 100 mass% of the composition.

Known additives that can be generally added to the composition containing a photochromic compound, for example, additives such as a surfactant, an antioxidant, a radical scavenger, a light stabilizer, a UV absorbing agent, an anti-coloring agent, an antistatic agent, a fluorescent dye, a dye, a pigment, a fragrance, a plasticizer, a silane coupling agent in an arbitrary amount can be additionally added to the composition. Known compounds can be used as these additives.

The composition can be prepared by simultaneously or sequentially mixing the various components described above in any order.

### [Optical article]

One aspect of the present invention relates to an optical article including a substrate and a photochromic layer obtained by curing the composition.

Hereinafter, the optical article will be described in more detail.

### <Substrate>

The optical article can have a photochromic layer on a substrate selected according to the type of the optical article. As an example of the substrate, a spectacle lens substrate may be a plastic lens substrate or a glass lens substrate. The glass lens substrate may be, for example, a lens substrate made of inorganic glass. The lens substrate is preferably a plastic lens substrate because it is lightweight, hard to break, and easy to handle. Examples of plastic lens substrates include styrene resins such as (meth)acrylic resins, allyl carbonate resins such as polycarbonate resins, allyl resins, and diethylene glycol bis(allyl carbonate) resins (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and a cured product (generally referred to as a transparent resin) obtained by curing a curable composition containing a (thio)epoxy compound having one or more disulfide bonds in the molecule. As the lens substrate, an undyed lens (colorless lens) may be used or a dyed lens (colored lens) may be used. The refractive index of the lens substrate may be, for example, about 1.60 to 1.75. However, the refractive index of the lens substrate is not limited to the above range, and may be within the above range, or may be vertically separated from the above range. In the present invention and this specification, the refractive index is a refractive index for light having a wavelength of 500 nm. In addition, the lens substrate may be a lens having refractive power (so-called prescription lens) or a lens having no refractive power (so-called no-prescription lens).

The spectacle lens may include various lenses such as a single focus lens, a multifocal lens, and a progressive power lens. The type of the lens is determined by the surface shape of both sides of the lens substrate. In addition, the surface of the lens substrate may be a convex surface, a concave surface, or a flat surface. In a general lens substrate and spectacle lens, the object-side surface is a convex surface and the eyeball-side surface is a concave surface. However, the present invention is not limited thereto. The photochromic layer may be generally provided on the object-side surface of the lens substrate, or may be provided on the eyeball-side surface.

### <Photochromic layer>

The photochromic layer of the optical article can be formed by directly applying the composition onto the surface of the substrate or indirectly applying the composition onto the surface of the substrate with one or more other layers, and performing a curing treatment on the applied composition. Examples of other layers include a primer layer for improving the adhesion between the photochromic layer and the substrate. Such a primer layer is known. As the coating method, known coating methods such as a spin coating method and a dip coating method can be used, and a spin coating method is preferable in consideration of coating uniformity. The curing treatment may be light emission and/or heat treatment, and light emission is preferable in order for the curing reaction to proceed in a short time. Curing treatment conditions may be determined according to the types of various components (polymerizable compounds, polymerization initiators and the like described above) contained in the composition, and the formulation of the composition. The thickness of the photochromic layer formed in this manner is, for example, preferably in a range of 5 to 80 µm, and more preferably in a range of 20 to 60 µm.

The optical article having the photochromic layer may or may not have one or more functional layers in addition to the photochromic layer. Examples of functional layers include layers known as functional layers of the optical article such as a protective layer, an anti-reflective layer, a water repellent or hydrophilic antifouling layer, and an antifogging layer for improving the durability of the optical article.

One aspect of the optical article is a spectacle lens. In addition, as one aspect of the optical article, a goggles lens, a visor (cap) of a sun visor, a shield member of a helmet, and the like may be exemplified. The composition is applied to the substrate for the optical article, a curing treatment is performed on the applied composition to form a photochromic layer, and thus an optical article having an anti-glare function can be obtained.

### [Eyeglasses]

One aspect of the present invention relates to eyeglasses including the spectacle lens which is one aspect of the optical article. The details of the spectacle lens included in the eyeglasses are as described above. When the eyeglasses include such a spectacle lens, for example, the photochromic compound contained in the photochromic layer develops a color when hit with sunlight outdoors and an anti-glare effect can be exhibited like sunglasses, and when returned to indoors, the photochromic compound can fade to restore transmission. Known techniques can be applied to the configuration of the frame and the like for the eyeglasses.

### [Examples]

Hereinafter, the present invention will be described in more detail with reference to examples. However, the present invention is not limited to the aspects shown in the examples.

### [Example 1]

### <Preparation of polymerizable composition for optical article (coating composition for forming photochromic layer)>

In a plastic container, 68 parts by mass of polyethylene glycol dimethacrylate (in Formula 2, n=14, R represents an ethylene group, a molecular weight of 736) as the component A, 20 parts by mass of 1,9-nonane diol diacrylate (in Formula 1, R¹ and R² represent a hydrogen atom, m=9, a molecular weight of 268) as the component B, and 12 parts by mass of trimethylolpropane trimethacrylate (a molecular weight of 296) as the component C were mixed.

In the mixture of the polymerizable compounds obtained in this manner, a photochromic compound (indeno-fused naphthopyran compound represented by the structural formula described in U.S. Patent Application Publication No. 5645767), a photoradical polymerization initiator (bis(2,4,6-trimethylbenzoyl)phenylphosphine oxide (Omnirad 819 commercially available from IGM Resin B.V.)), an antioxidant (bis[3-(3-tert-butyl-4-hydroxy-5-methylphenyl)propionic acid][ethylene bis(oxyethylene)]), and a light stabilizer (bis(1,2,2,6,6-pentamethyl-4-piperidyl)sebacate) were mixed and sufficiently stirred. Then, defoaming was performed with a rotation/revolution type stirring defoaming device. Accordingly, a polymerizable composition for an optical article (coating composition for forming a photochromic layer) was prepared. The content of the above components based on a total amount of 100 mass% of the composition was 94.90 mass% for the mixture of the polymerizable compounds, 3.00 mass% for the photochromic compound, 0.30 mass% for the photoradical polymerization initiator, 0.90 mass% for the antioxidant, and 0.90 mass% for the light stabilizer. In the composition, based on a total amount of 100 mass% of the polymerizable compounds, the content of the component A was 68.0 mass%, the content of the component B was 20.0 mass%, and the content of the component C was 12.0 mass%.

### <Production of spectacle lens>

A plastic lens substrate (product name EYAS commercially available from HOYA; a central wall thickness of 2.5 mm, a radius of 75 mm, S-4.00) was immersed in a 10 mass% sodium hydroxide aqueous solution (a liquid temperature of 60°C) for 5 minutes and then washed with pure water and dried. Then, a primer layer was formed on a convex surface (object-side surface) of the plastic lens substrate. Specifically, an aqueous polyurethane resin solution (polycarbonate polyol polyurethane emulsion; a solid content concentration of 38 mass%) was applied to the convex surface of the plastic lens substrate in an environment of a temperature of 25°C and a relative humidity of 50% by a spin coating method, and then naturally dried for 15 minutes, and thus a primer layer with a thickness of 5.5 µm was formed.

The coating composition for forming a photochromic layer prepared above was applied onto the primer layer by a spin coating method. Spin coating was performed by the method described in Japanese Patent Application Publication No. 2005-218994. Then, ultraviolet rays (a wavelength of 405 nm) were emitted to the composition applied onto the primer layer in a nitrogen atmosphere (an oxygen concentration of 500 ppm or less), and the composition was cured to form a photochromic layer. The thickness of the formed photochromic layer was 45 µm.

Accordingly, a spectacle lens having a photochromic layer was produced.

### [Comparative Example 1]

A spectacle lens was produced in the same method as in Example 1 except that 20 parts by mass of neopentyl glycol dimethacrylate (a molecular weight of 240, not applicable to Formula 1) was used in place of 1,9-nonane diol diacrylate of the component B.

### [Evaluation method]

### (1) Visible light transmission without light emission

The transmittance (measurement wavelength: 550 nm) of each spectacle lens was measured with a spectrophotometer (commercially available from Otsuka Electronics Co., Ltd.) before the following coloring density was measured. The larger value of the transmittance measured in this manner (hereinafter referred to as "initial transmittance") indicates better visible light transmission without light emission.

### (2) Coloring density

The coloring density was evaluated by the following method according to JIS T7333:2005.

For the photochromic layers of the spectacle lenses of examples and comparative examples, light was emitted to the surface of the photochromic layer through an aerosol mass filter using a xenon lamp for 15 minutes (900 seconds), and the photochromic compound in the photochromic layer was caused to develop a color. The transmittance (measurement wavelength: 550 nm) during color development was measured with a spectrophotometer (commercially available from Otsuka Electronics Co., Ltd.). The light emission was performed so that the tolerances of the irradiance and the irradiance specified in JIS T7333:2005 were values shown in the following Table 1.

**[Table 1]**

| Wavelength range (nm) | Irradiance (W/m²) | Tolerance of irradiance (W/m²) |
|---|---|---|
| 300 to 340 | <2.5 | - |
| 340 to 380 | 5.6 | ±1.5 |
| 380 to 420 | 12 | ±3.0 |
| 420 to 460 | 12 | ±3.0 |
| 460 to 500 | 26 | ±2.6 |

The smaller value of the transmittance measured above (hereinafter referred to as a "transmittance during color development") indicates a higher density in color development of the photochromic compound.

The above results are shown in Table 2.

**[Table 2]**

| | | |
|---|---|---|
| | | |

| | Initial transmittance (%) | Transmittance during color development (%) |
|---|---|---|
| Example 1 | 87.1 | 18.1 |
| Comparative Example 1 | 87.1 | 18.9 |

Based on the results shown in Table 2, it was confirmed that the spectacle lens of Example 1 had excellent visible light transmission without light emission and had a higher coloring density than Comparative Example 1.

### [Example 2]

A spectacle lens was produced in the same method as in Example 1 except that, in preparation of the polymerizable composition for an optical article (coating composition for forming a photochromic layer), the content of the photochromic compound based on a total amount of 100 mass% of the composition was changed to 11.27 mass%.

The content of the above components based on a total amount of 100 mass% of the composition was 86.73 mass% for the mixture of the polymerizable compounds, 11.27 mass% for the photochromic compound, 0.26 mass% for the photoradical polymerization initiator, 0.87 mass% for the antioxidant, and 0.87 mass% for the light stabilizer.

### [Example 3]

In a plastic container, 61.2 parts by mass of the polyethylene glycol dimethacrylate (in Formula 2, n=14, R represents an ethylene group, a molecular weight of 736) as the component A, 18.0 parts by mass of 1,9-nonane diol diacrylate (in Formula 1, R¹ and R² represent a hydrogen atom, m=9, a molecular weight of 268) as the component B, 10.8 parts by mass of trimethylolpropane trimethacrylate (a molecular weight of 296) as the component C, and 10.0 parts by mass of 2-phenoxy ethylacrylate (viscosity 13 cP) as the component D were mixed. A spectacle lens was produced in the same method as in Example 2 except that the mixture of the polymerizable compounds was prepared as above.

In the coating composition for forming a photochromic layer prepared in Example 3, based on a total amount of 100 mass% of the polymerizable compounds, the content of the component A was 61.2 mass%, the content of the component B was 18.0 mass%, the content of the component C was 10.8 mass%, and the content of the component D was 10.0 mass%.

The spectacle lenses of Example 2 and Example 3 were evaluated as above. The results are shown in Table 3.

**[Table 3]**

| | Initial transmittance (%) | Transmittance during color development (%) |
|---|---|---|
| Example 2 | 83.6 | 14.5 |
| Example 3 | 83.8 | 14.6 |

As shown in Table 3, the Example 3 containing the component D and the Example 2 not containing the component D had a similar coloring density and visible light transmission without light emission. Based on the results, it can be said that, in Example 3, the component D had no influence on the coloring density or the visible light transmission without light emission.

### [Examination on coloring density and photoresponsivity]

A spectacle lens was produced in the same method as in Example 1 except that, in preparation of the polymerizable composition for an optical article (coating composition for forming a photochromic layer), the content of the photochromic compound based on a total amount of 100 mass% of the composition was increased to 8.0 mass%, and the mixture of the polymerizable compounds described above was reduced by the amount that the photochromic compounds were increased. Here, in the composition used for forming the photochromic layer, the content of the component B based on a total amount of 100 mass% of the polymerizable compounds was 20.0 mass% as in Example 1.

In addition, from the composition, a plurality of types of compositions in which the amount of the component A was decreased by the amount that the component B was increased, and the amount of the component A was increased by the amount that the component B was decreased were prepared. A spectacle lens was produced in the same method as in Example 1 except that a photochromic layer was formed using the composition prepared in this manner.

The initial transmittance and the transmittance during color development of the spectacle lens produced in this manner were measured by the methods described above.

After the transmittance during color development was measured, a time (half-life) required from the time when light emission was stopped until the transmittance (measurement wavelength: 550 nm) became [(initial transmittance-transmittance during color development)/2] was measured. The half-life of the spectacle lens of Example 1 was measured in the same manner. It could be determined that a smaller value of the half-life measured in this manner indicates a faster fade rate and better photoresponsivity.

Fig. 1 shows a graph in which the coloring density and the half-life are plotted with respect to the content of the component B. In Fig. 1, the scale of the vertical axis on the right side indicates the coloring density, and the scale of the vertical axis on the left side indicates the half-life. The approximate expression in Fig. 1 is an expression obtained by a least squares method.

From the graph in Fig. 1, it can be said that a higher content of the component B indicates a higher coloring density, and a lower content of the component B indicates a faster fade rate, which is one index indicating photoresponsivity.

Finally, the above aspects will be summarized.

According to one aspect, there is provided a polymerizable composition for an optical article including a photochromic compound, the component A, and the component B.

According to the composition, it is possible to form a high photochromic layer having a high coloring density when a color is developed by receiving light, and excellent visible light transmission without light emission.

In one aspect, the composition may further include the component C.

In one aspect, the composition may further include the component D.

In one aspect, the composition may contain 50.0 mass% or more of the component A based on a total amount of the polymerizable compounds contained in the composition.

In one aspect, the composition may contain 5.0 mass% or more and 30.0 mass% or less of the component B based on a total amount of the polymerizable compounds contained in the composition.

According to one aspect of the present invention, there is provided an optical article including a substrate and a photochromic layer obtained by curing the composition.

In one aspect, the optical article may be a spectacle lens.

In one aspect, the optical article may be a goggles lens.

In one aspect, the optical article may be a visor of a sun visor.

In one aspect, the optical article may be a shield member of a helmet.

According to one aspect, there are provided eyeglasses including the spectacle lens.

Two or more of the various aspects and forms described in this specification can be combined in arbitrary combinations.

The embodiments disclosed herein are only examples in all respects and should not be considered as restrictive. The scope of the present invention is not limited to the above description, but is defined by the scope of claims, and is intended to encompass equivalents to the scope of claims and all modifications within the scope of the claims.

### [Industrial Applicability]

The present invention is beneficial in the technical fields of eyeglasses, goggles, sun visors, helmets and the like.

## Claims

1. A polymerizable composition for an optical article, comprising:
a photochromic compound;
a component A: an acyclic methacrylate having a molecular weight of 500 or more; and
a component B: a (meth)acrylate having a molecular weight of 400 or less and represented by the following Formula 1: 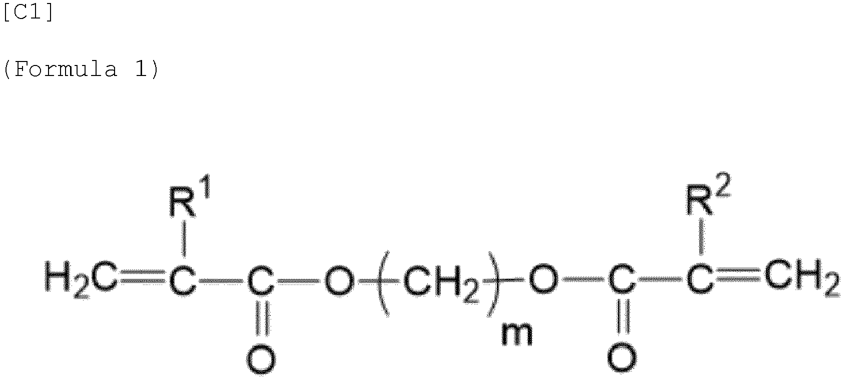 [in Formula 1, R¹ and R² each independently represent a hydrogen atom or a methyl group, and m represents an integer of 1 or more].

2. The polymerizable composition for an optical article according to claim 1, further comprising
a component C: an acyclic tri- or higher-functional (meth)acrylate.

3. The polymerizable composition for an optical article according to claim 1 or 2, further comprising
a component D: a polymerizable compound having a viscosity of 100 cP or less and selected from the group consisting of (meth)acrylates and vinyl ether.

4. The polymerizable composition for an optical article according to any one of claims 1 to 3,
wherein the composition contains 50.0 mass% or more of the component A based on a total amount of the polymerizable compounds contained in the composition.

5. The polymerizable composition for an optical article according to any one of claims 1 to 4,
wherein the composition contains 5.0 mass% or more and 30.0 mass% or less of the component B based on a total amount of the polymerizable compounds contained in the composition.

6. An optical article, comprising:
a substrate; and
a photochromic layer obtained by curing the polymerizable composition for an optical article according to any one of claims 1 to 5.

7. The optical article according to claim 6, which is a spectacle lens.

8. The optical article according to claim 6, which is a goggles lens.

9. The optical article according to claim 6, which is a visor of a sun visor.

10. The optical article according to claim 6, which is a shield member of a helmet.

11. Eyeglasses including the spectacle lens according to claim 7.
